Europäisches Patentamt

European Patent Office

Office européen des brevets

(19)

(11) Publication number: **0 241 860**
**A2**

(12)

# EUROPEAN PATENT APPLICATION

(21) Application number: **87105250.2**

(51) Int. Cl.⁴: **G 01 N 27/90**

(22) Date of filing: **09.04.87**

(30) Priority: **18.04.86 SE 8601785**

(43) Date of publication of application: **21.10.87**
**Bulletin 87/43**

(84) Designated Contracting States: **BE DE FR GB IT**

(71) Applicant: **TÖRNBLOMS KVALITETSKONTROLL AB,**
**Vikhus Rytterne, S-725 92 Västeras (SE)**

(72) Inventor: **Toernblom, Bengt Hjalmar, Vikhus Rytterne,**
**S-72592 Vaesteras (SE)**

(74) Representative: **Boecker, Joachim, Dr.-Ing.,**
**Rathenauplatz 2-8, D-6000 Frankfurt a.M. 1 (DE)**

(54) Device for storing and/or processing of signals obtained from a transducer.

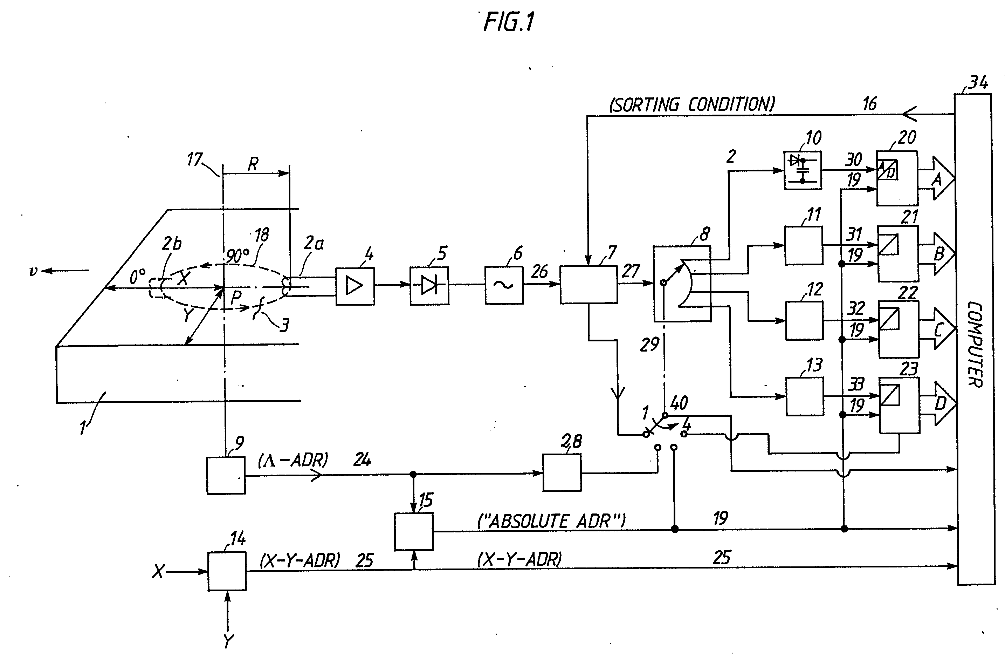

(57) Device for storing and/or processing of fault signals obtained from a transducer with associated electronic equipment, which signals are completely or partially derived from one or more quantities, for example a defect in or on a steel blank. The fault signals are supplied to at least one condition function or condition circuit. The signals are distributed as a function of said conditions and the distributed signals are supplied to parallel signal storing and/or signal processing circuits which, for example, operate in parallel but independently (Figure 1).

0241860

April 8, 1987
21 859 PE/f74

-1-

Törnbloms Kvalitetskontroll AB
S-721 97 Västeras / Sweden

## Device for storing and/or processing of signals obtained from a transducer

The invention relates to a device for storing and/or processing of signals obtained from a transducer according to the precharacterising part of Claim 1.

Within the field of non-destructive testing (NDT) and measurement, the development of the eddy current based measuring technique goes towards increasingly higher signal processing rates. The reason for this is that the requirements for performance with regard to the surface scanning are successively increased, so that nowadays it is desired, for example, to be able to indicate the position of a small surface crack with an accuracy within a few centimetres, as well as the size and nature of the crack.

In, for example, crack detection on hot continuously cast billets, the billet surface is therefore scanned by means of, for example, an eddy current transducer which often rotates at a speed of several thousands of revolutions per minute along a circular path with a radius of, for example, 100 mm.

The large billet surface in combination with the surface scanning pattern of the transducer per unit of time results in the amount of signal information becoming very large and unwieldy in those cases where it is desired to study the fault signals and their positions, i.e. the address on the billet, in detail.

The current method when attempting to master the problems mentioned above is to try to collect the fault signal information by means of simple shift registers (buffers) only, until the subsequent signal processing, for example in a computer, hopefully has caught up.

The above-mentioned method, however, involves the risk that, for example in the case of many defects on the billet surface, fault signal information is lost because of, for example, "overflow" or a long cycle time in the computers used, which is a considerable and often unacceptable shortcoming.

It is a wish to be able to scan the test object also with respect to small defects and their positions. This presupposes a very fine-meshed scanning pattern, which, in those cases where it is desired to operate with a limited number of transducers, means that the transducers, for example rotary surface transducers, have to rotate at high speeds. Especially in those cases where, for example for reasons of cost, one single transducer is used, the transducer arrangement has to be moved rapidly back and forth over the billet by way of some type of transducer manipulator, for example an industrial robot, in order to be able to scan the billet surface successively when casting is in progress. The requirement for a high revolution rate is then, of course, greatly increased. This, in turn, places very high demands on the subsequent signal treatment, including the signal processing, which has to take place very rapidly so that no defects are lost or treated incompletely.

The invention aims at developing a device of the above-mentioned kind, which enables to process data collected at a high revolution rate of the transducer with a fine-meshed scanning pattern and without running the risk of loosing the measured data.

To achieve this aim the invention suggests a device for storing and/or processing of signals according to the introductory part of Claim 1, which is characterized by the features of the characterizing part of Claim 1.

Further developments of the invention are characterized by the features of the additional claims.

The invention can be regarded as a capacity increasing signal processing device, based on a combination of separation of fault signals, which fulfill certain conditions, and parallel signal processing.

By selecting the fault signals important for the actual testing purpose and thus limiting the number of signal to be further processed as well as by processing the signals in parallel-operating circuits (function blocks), the signal processing capacity can be considerably increased with retained reliability.

The invention may be used for, for example, crack detection based on so-called eddy current technique, and can then be regarded as a complement to the subject-matter of SE-A-7507857, SE-A-7813344, EP-A-83903839, EP-A-84902106, EP-A-85101296, EP-A-85101525, EP-A-86100002, and SE-A-8503894. The type of transducer described in SE-A-8503894 is a good example of how the transducer may be designed.

The following definitions apply in this description:

-4-

By "test object" are meant, for example, a continuously cast billet, a sheet metal, a steel melt, etc.

By "defect" are meant, for example, a crack, a surface crack, a rolled-in flake, a depression, a deep-seated defect, an inclusion, etc.

By "transducer" are meant, for example, a surface-sensing eddy current transducer, a coil supplied with several carrier frequencies, etc.

By "transducer" arrangement is meant, for example a rotary transducer, i.e. the device (e.g. a whirler) which moves the transducer coil in a circular path over the surface of the test object.

By "fault signal" is meant the signal which completely or partially originates from a quantity, for example a defect, in or on the test object.

By "defect variable" are meant, for example, a type of defect, the depth of a crack, the position of a crack, etc.

By "quantity" are meant, for example, a defect, a change, a dimension, etc.

By "condition" are meant, for example, the position of the transducer, the position of the defect on the billet, etc.

The invention will now be described in greater detail with reference to the accompanying drawings showing - by way of example - in

Figure 1 the principle of one embodiment of a device according to the invention,

Figure 2 the dividing of a circular scanning path into for quadrants to achieve a certain orientation.

The following description only refers to one of many feasible variants of the device according to the invention.

Figure 1 shows a continuously cast billet 1 moving at a rate of v m/min. An eddy current-based surface transducer 2 rotates closely above and parallel to the surface of the billet 1 in a circular path 18 with the radius R. Figure 1 shows the transducer 2 at two different positions 2a and 2b, respectively. The centre axis 17 of the path of rotation is essentially perpendicular to the surface of the billet 1 and located at the distances X and Y, respectively, from the edges of the billets 1. The centre axis 17 can be moved with the aid of, for example, a transducer manipulator mechanism, whereby the distances X and Y are, of course, are changed.

The distances X and Y represent the coordinate address 25 of the transducer arrangement, whereas, for example, the position of the transducer 2 in relation to the centre point P can be regarded as the transducer rotation address 24 superimposed on the address of the transducer arrangement.

Taken together, the two addresses constitute the so-called absolute address 19 of the transducer 2, which refers to some suitable point on the billet surface.

The transducer arrangement address 25 is obtained from a position transducer 14, whereas the transducer rotation address 24 is obtained from a position transducer 9 consisting of, for example, an angle transducer mounted on the centre shaft of the transducer arrangement. In the calculation unit 15, the absolute address 19 is calculated, starting from the address signals 24 and 25.

The transducer 2 is connected to the circuits 4,5 and 6, which include conventional amplifiers, detectors and filters. The output signal 26 from the filter 6 contains a great deal of signal information which is derived, for example, from the surface of the test object, such as signals about all the defects 3 passed by the transducer 2 during rotation. At high rotational speeds and rapid movement of the centre point P of the transducer arrangement over the billet surface, the amount of information in the signal 26 often increases to an unmanageable level.

When the test object, i.e. in this example the billet 1, is not the end product but is intended to be further processed in, for example, a strip mill or the like, not all types of defects are dangerous to this subsequent process. For this reason it is possible, via a circuit 7 in Figure 1 which includes one or more condition functions, to filter out those signals which can be expected to be relatively harmless and which, therefore, are of no interest for further signal processing and position determination. Examples of such harmless defects may be oscillation marks, small flakes, etc. Another case is when spot grinding of defects, if any, is to be carried out. In that case it is sufficient to mark the deepest defect, for example the crack on the partial area in question, for example a surface quadrant, adapted to the precision of the grinding machine.

Within the scope of the invention, the condition circuit/condition function 7 can be positioned at other locations in the system, for example be included as a part in each parallel channel. The fundamental effect will, however, be the same. In similar manner, other function blocks can be varied and change positions within the scope of the invention.

The condition circuit 7 is controlled by sorting conditions 16, which can be varied based on, for example, the fault properties which are expected to result from the alloy in the billet in question. The conditions may, for example, be based on:

- signal frequency
- signal amplitude
- frequency spectrum
- pulse density
- signal appearance, etc.

The result of the separation which takes place in the circuit 7 is a number of selected fault signals 27. These signals are supplied to the selector or distributor 8 which, for example in the second position of the switch 40 (Figure 1), is controlled by the decoder 28, the input signal 24 of which consists of the angle code from the position transducer 9 (transducer rotation address). The signal 29 provides information about, for example, in which quadrant the transducer 2 is momentarily situated. In this way, the selector 8 will distribute the signals 27 to the parallel signal storing intermediate memories 10,11,12 and 13, which thus store signals which are each derived from one transducer rotation part, for example a quadrant.

The signals 30,31,32 and 33 thus represent stored selected signals from, in this case, a respective transducer rotation quadrant.

In certain cases, it is sufficient to process these signals further, for example by means of a subsequently positioned computer 34, possibly together with the XY-address information 25. In cases with high requirements for rapidity, it is often advantageous to supplement the signals 30,31,32 and 33 by address information 19, which takes place in the circuits 20,21,22 and 23.

The signal outputs A,B,C and D can therefore contain, in addition to the sorted-out "dangerous" fault signals, also information about the points or addresses on the billet 1 from where the fault signals emanate.

From Figure 1 it is clear that the selector 8 can be controlled in several different ways depending on the choice of the function of the switch 40. In the position of the selector shown in Figure 1, i.e. position 1, the selector 8 is controlled by a transducer variable, for example type of crack or level of crack depth. In the second position of the switch 40 the selector 8 is controlled by the angular position of the transducer 2 in relation to the path of rotation. In the third position the selector 8 is controlled by the position of the transducer 2, i.e. the address, in relation to the test object 1. In the fourth position the selector 8 is controlled as a function of the memory status of the respective parallel channel, i.e. if there are free memories available in any channel. Which mode of control or condition to choose is dependent on how the final measurement result is intended to be used.

As an alternative to allowing the selector 8 to be controlled by the signal 24, i.e. the second position of switch 40, the fault signals 27 can be distributed with the aid of the signal 19, i.e. the third position of switch 40, whereby the distribution takes place, in principle, as a function of the position of the transducer 2 in relation to the test object 1. The number of parallel channels or outputs (A-D) should then be extended.

In this way it is relatively simple to allow the fault signals, which are derived from different turns of the transducer rotation but which refer to the same point on the billet surface, to be stored together via, for example, an integration part, so that a signal mean value is obtained for the respective point or partial area on the billet 1. This increases the precision of the measurement.

The outputs A,B,C and D etc. may, for example, be allowed to feed a respective memory which successively assumes a mean value referring to a suitably selected partial area on the billet surface.

This mean value generation may, of course, also take place in the blocks 20-23, if this is considered appropriate.

The most important condition for being able to carry out the mean value generation described here and other similar signal processing operations, where information is obtained from separate occasions but refer to the same section of the surface, is that the defects are rapidly provided with address information.

To enable this to be carried out in a simple manner, rapid, preferably hardware-generated address information and similarly rapid processing of the signals are required, the parallel intermediate signal storing with possibly associated signal processing forming an important part.

A consequence of this is also that the requirements on the subsequently positioned computer 34 are not so high, and therefore it is often possible to use conventional computers.

To be able to determine the position and orientation of a defect, a requirement is that the transducer rotates very rapidly, since in that way the amount of information will increase because, for example, the transducer is able to cross the crack several times with different angles of intersection.

For the same reason, different types of fault can be determined and sorted and the orientation of the defects be calculated if the number of turns of rotation is sufficiently high. The consequence of a high number of revolutions is that the fault signals are short in time, often shorter than 1 ms, which means that it will be virtually impossible to signal process these signals directly via computers without the aid of supplementary hardware solutions. For this reason intermediate memories 10,11,12 and 13 are used, consisting of analog memories containing a rectifier and a subsequent capacitor which is charged to the peak value of the fault signal via the rectifier.

However, there is nothing preventing the intermediate memories from being manufactured in a digital design, if this is considered appropriate.

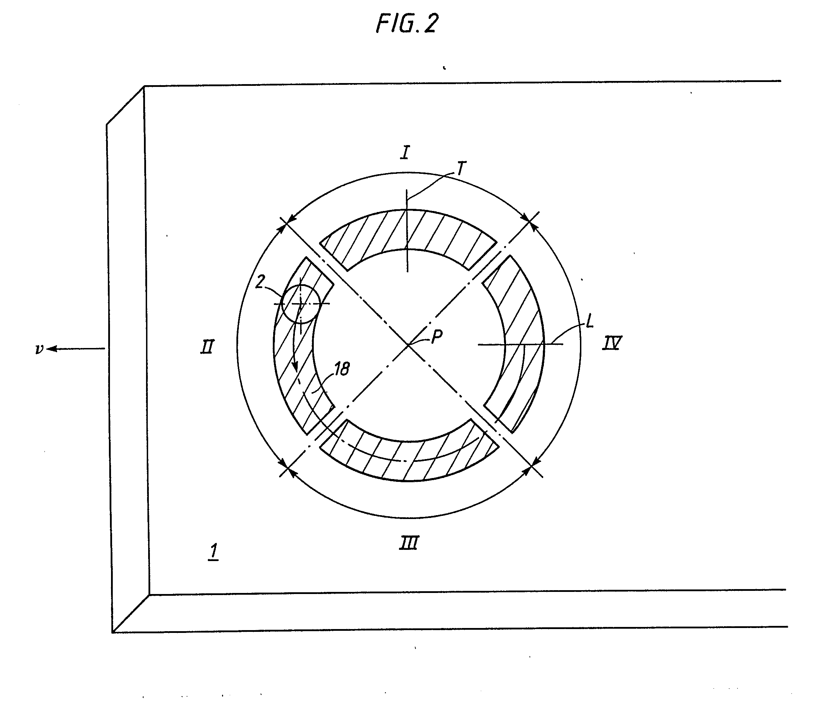

Figure 2 shows how the transducer coil 2 and its path of rotation 18 over the billet 1 are positioned. In the case of eddy current testing, the sensitivity to defects is normally greatest when the transducer crosses a crack transversely, i.e. at an angle of 90°. The sensitivity is normally greatly decreased when the transducer crosses the crack at an angle smaller than 45°. This results in the sensitivity to transverse cracks T (see quadrant I in Figure 2) being greatest in quadrants I and III and in the sensitivity to longitudinal cracks L being greatest in quadrants II and IV, provided the quadrants are oriented as shown in Figure 2. This is one of the reasons why it may be advantageous to choose position 2 of the selector 8 when it is desired to separate transverse and longitudinal cracks.

The signal processing blocks 20,21,22 and 23 may contain analog-digital converters which convert the analog signals from the capacitors in the memories 10-13 to digital signals.

Through the parallel signal processing, these A/D converters will have time to carry out the signal conversion.

The signal processing blocks may also, for example, include one microcomputer each for additional sophisticated, parallel signal processing.

The microcomputers may also be included, on the one hand, as a part of the "hand-shaking procedure" with the superordinate computer 34, and, on the other hand, to act as run register (buffer storage) while waiting for the superordinate computer 34 to be ready to receive the fault signals in question.

If it is assumed that the speed of rotation of the transducer is 3000 r.p.m., i.e. 50 r.p.s., the time of revolution will be 1000/50 = 20 ms.

If the sorting condition 16 is to select the greatest fault signal/defect per quadrant, the signal outputs A,B,C and D will show the measured value in question during a period of $> 3/4$ 20 ms, i.e. $>$ 15 ms. The subsequent computer 34 thus has $>$ 15 ms in which to take care of the signals/information on the outputs A-D. Per output this will then be $>$ 15/4, i.e.$>$ 3.75 ms, which is a simple task compared with the pulse duration of the fault signal which is about 0.1-0.5 ms.

If it is chosen to operate with one computer per output, this will of course be even more favourable, since in that case each computer will have >15 ms in which to take care of the information in question.

Often it is not only of interest to locate the most deep-seated defect but it is also desired to obtain an overall picture of the quality of the billet surface in broad outline. A suitable way of getting access to this information is to calculate a so-called quality code as a function of the number of fault signals (defects) per chosen unit of surface, for example a quadrant, and/or the size and/or orientation and/or type of these defects.

The quality code may, for example, be indicated as a number referring to the quality of the whole billet surface or parts thereof.

Because of the high capacity for signal processing made possible by the invention, and the resultant accurate addressing possibility of the defects in question, the computer 34 is able to reproduce the billet surface or a part thereof via a indicating member such as, for example, a visual display unit or a printer.

This reproduction may be according to scale and may, for example, be divided into equally large squares, representing 200 X 200 mm large squares on the billet surface.

In the respective square of this reproduction, the greatest crack depth, for example, is then indicated by a numerical code or the like.

This information is thereafter used, for example, by the billet grinding operator when the defects are to be ground away, resulting in optimizing the grinding process.

The corresponding information in the computer can, of course, also be used for automatic control of equipment for removing defects which are detrimental to a subsequent process.

The invention can be implemented by using both hardware and software. In order to utilize the invention in full, however, hardware solutions for, for example, the intermediate memories 10-13 are primarily used.

The invention can be varied in many ways within the scope of the appended claims.

-14-

C L A I M S

1. Device for storing and/or processing of signals obtained from or via at least one transducer (2) with associated electronic equipment (4,5,6), said transducer being movable in relation to a test object (1), said signals being completely or partially derived from one or more quantities, for example a defect (3) in or on the test object, the device comprising at least one condition function/condition circuit (7), at least one selector/distributor (8), and at least two parallel signal storing and/or signal processing circuits, c h a r a c t e r i z e d in that at least one transducer (2) is adapted to rotate in a circular path (18) or the like, that at least one condition function or condition circuit is adapted to be used for the separation of signals of a minor interest, that a distributor (8) is adapted to automatically distribute signals, for example crack signals, which are of interest in the case in question, for example which are detrimental to a continuous casting process, as a function of a condition, to parallel signal storing and/or signal processing circuits (10-13 and 20-23, respectively), for example operating in parallel but independently, and that these signals of interest are adapted to be automatically provided with address information (19) about the part of the test object they refer to.

2. Device according to Claim 1, c h a r a c t e r i z e d in that the address information belonging to the respective fault signal is adapted to be calculated as a function of, for example the sum of, the position/address X,Y (24) of the transducer arrangement and the position/address (25) of the transducer rotation superimposed on the first-mentioned position/address.

3. Device according to Claim 1 or 2, c h a r a c t e r i z e d in that the turns of rotation of the transducer are

-15-

divided into parts, for example four quadrants, and that those fault signals per part which fulfill predetermined conditions, for example the greatest fault signal, are adapted to be supplied to subsequent signal and/or signal processing circuits.

4. Device according to any of the preceding Claims, c h a r a c t e r i z e d in that at least two different types of defects, for example longitudinal and transverse surface cracks, are separated and/or determined as a function of signals referring to different parts, for example quadrants, of the turns of rotation of the transducer.

5. Device according to any of Claims 1-4, c h a r a c t e r i z e d in that the superimposed transducer rotation position is directly or indirectly adapted to be calculated with the aid of a position transducer (9), for example a photocell or a code disc, mounted on or in the rotatable transducer arrangement.

6. Device according to any of Claims 1-5, c h a r a c t e r i z e d in that the fault signals are adapted to be distributed as a function of the available memory capacity in the respective parallel channels.

7. Device according to any of Claims 1-6, c h a r a c t e r i z e d in that fault signals originating from separate turns of rotation of the transducer and referring to the same part/address on or in the test object are adapted to be stored and/or signal processed, for example, by way of correlation technique, so as to obtain some form of statistical mean value making the fault signal information more reliable.

0241860

April 8, 1987
21 859 PE

FIG.1

FIG.2

April 8, 1987
21 859 PS

0241860